# FASCICULE DE BREVET EUROPEEN

(11) **EP 2 147 230 B1**
(45) Date de publication et mention de la délivrance du brevet: **19.10.2011**
(21) Numéro de dépôt: 08787936.7
(22) Date de dépôt: 10.04.2008
(51) Int. Cl.: F16G 3/04, F16G 3/02

(54) **CRAMPONS DE FIXATION D'AGRAFES DE JONCTION D'EXTRÉMITÉ DE BANDE TRANSPORTEUSE ET ENSEMBLES CRAMPON-AGRAFE**
CLIPS ZUR BEFESTIGUNG VON KLAMMERN ZUR VERBINDUNG VON FÖRDERBANDENDEN UND CLIP-KLAMMER-BAUGRUPPEN
CLIPS FOR ATTACHING STAPLES FOR JOINING CONVEYOR BELT ENDS AND CLIP-STAPLE ASSEMBLIES

(30) Priorité: 10.04.2007 FR 0702650
(43) Date de publication de la demande: 27.01.2010
(73) Titulaire: Aser, 42401 Saint-Chamond (FR)
(72) Inventeur: JAKOB, Horst, F-30360 Deaux (FR)
(74) Mandataire: Novagraaf Technologies
(86) Numéro de dépôt international: PCT/FR2008/000501
(87) Numéro de publication internationale: WO 2008/142280

(56) Documents cités:
- FR-A- 897 662
- FR-A- 1 185 742

## Description

La présente invention se rapporte à des crampons destinés à la fixation aux extrémités de bande transporteuse d'agrafes de jonction d'extrémité de bande transporteuse. De plus l'invention se rapporte à un ensemble crampon-agrafe associant les deux éléments avant la pose des agrafes sur les extrémités de bande transporteuse.

On connaît les agrafes pour jonctions de bande transporteuse, de courroie et de produits similaires, constituées d'une plaque supérieure et d'une plaque inférieure, les deux dites plaques étant reliées à une extrémité par une ou plusieurs parties plus étroites appelées charnons, lesdites agrafes pouvant être montées en formant deux séries enserrant chacune une extrémité de bande transporteuse, entre les plaques supérieures et les plaques inférieures des agrafes de chaque série, la même opération étant effectuée sur l'autre extrémité de bande transporteuse en décalant les charnons de la deuxième série d'agrafes par rapport à ceux de la première série, de telle sorte que les charnons de la deuxième série s'imbriquent entre les charnons de la première série. Une tige de liaison et d'articulation est ensuite enfilée successivement dans un charnon d'une série d'agrafes puis dans un charnon de l'autre série d'agrafes et ainsi de suite, en réalisant ainsi l'équivalent d'une charnière.

En ce qui concerne la fixation des agrafes aux extrémités d'une bande transporteuse qu'elles enserrent entre des couples plaque supérieure/plaque inférieure on utilise divers moyens, deux moyens étant devenus les plus courants au fil du développement de la technologie concernée.

Le moyen de fixation d'agrafe le plus courant consiste en des crampons en forme de U réalisés en fil métallique rond. Ces crampons comportent un dos constitué par une partie de fil rond rectiligne qui se prolonge aux deux extrémités par des branches pointues de ce même fil pliées à angle droit par rapport au dos. Les pointes de branches de fil rond sont obtenues par usinage, c'est-à-dire meulage ou fraisage.

Un deuxième moyen de fixation d'agrafe connu est constitué par des griffes prolongeant la plaque supérieure de l'agrafe vers le bas.

Les crampons en fil métallique en forme de U sont enfilés dans des trous pratiqués dans la plaque supérieure des agrafes. Les branches pointues traversent ensuite l'extrémité de bande transporteuse enfilée entre la plaque supérieure et la plaque inférieure de l'agrafe. Les griffes prolongeant la plaque supérieure d'une agrafe sont enfoncées directement dans l'extrémité de bande transporteuse enfilée entre les deux plaques.

Initialement, les branches pointues des crampons, après avoir été enfoncées à travers l'épaisseur de l'extrémité de bande transporteuse, rencontraient des trous correspondants pratiqués dans l'autre plaque de l'agrafe puis passaient par ces trous et étaient rabattus sur l'extérieur de la plaque inférieure de l'agrafe. De même les griffes incorporées après avoir effectué un parcours similaire étaient également rabattues sur l'extérieur de la plaque inférieure. Ce repli était effectué au moyen d'une matrice de forme convenable disposée sous la plaque inférieure.

L'inconvénient des crampons en fil rond consiste dans le fait que pour disposer d'une excellente résistance à la flexion il est nécessaire d'augmenter le diamètre, d'où des difficultés résultant de la surépaisseur induite qu'il est impossible de loger entièrement dans un creux de la plaque supérieure de l'agrafe, d'où l'existence de problèmes avec les râcleurs. De plus, les crampons réalisés en fil métallique comportent des branches dont les parties d'extrémité et les pointes réalisées par meulage, ou par fraisage, possèdent des propriétés mécaniques qui ne les différencient pas du reste des crampons, c'est-à-dire du dos des crampons et des corps des branches. En vue du pliage des parties basses des branches, on choisit généralement des fils d'acier dont les propriétés mécaniques de dureté et de résistance à la flexion sont moyennes, dans le but d'éviter des casses lors du pliage. Ces propriétés sont contradictoires avec celles qui sont nécessaires pour que les pointes des branches traversent sans difficulté et sans déviation les carcasses de renforcement du matériau élastomère des bandes transporteuses.

On remarquera sur l'ensemble crampon-agrafe du brevet de l'art antérieur EP 0 464 399 que l'agrafe comporte dans sa partie supérieure un creux permettant de loger l'essentiel de l'épaisseur du dos du crampon. Cependant, il subsiste une petite surépaisseur susceptible de donner prise aux râcleurs. Si l'on veut accroître le diamètre du crampon en fil rond pour obtenir une meilleure résistance de celui-ci, le problème devient insoluble, car il faudrait augmenter l'épaisseur de la plaque supérieure de l'agrafe, qui pourrait elle-même encore davantage donner prise aux râcleurs.

un crampon possédant les caractéristiques du préambule de la revendication 1, est divulgué dans le brevet FR 897 662.

On comprendra donc que les crampons en fil rond ne pouvaient pas être perfectionnés du fait même de leur conception de base.

La présente invention a pour objet de proposer des crampons perfectionnés nouveaux qui éliminent totalement ces inconvénients et qui procurent de plus de nouveaux avantages tenant tant à la facilité de mise en oeuvre des nouveaux systèmes crampon-agrafe qu'à la robustesse à l'usage de ces nouveaux crampons avec de plus une versatilité de disposition des griffes de crampon permettant de créer à volonté des dispositions particulières permettant aux crampons qui ont été montés de résister à des contraintes exercées dans des directions diverses, selon l'utilisation de la bande transporteuse, en particulier en cas de mise en auge pour le transport de produits en vrac.

Ces objets sont atteints grâce à un crampon pour agrafes de jonction de bande transporteuse comportant une partie supérieure formant dos et des griffes globalement perpendiculaires à la partie supérieure formant dos destinées à passer dans des trous correspondants de la plaque supérieure d'une agrafe de jonction de bande transporteuse du type présentant un profil en forme de U, comportant une plaque supérieure, une plaque inférieure, et un ou plusieurs charnons réunissant la plaque supérieure et la plaque inférieure, caractérisé en ce que la partie supérieure formant dos est constituée par une plaque en tôle métallique formant dos et par deux ou plusieurs griffes qui sont globalement perpendiculaires à la plaque en tôle métallique formant dos et qui sont reliées à celles-ci.

Dans une première version les griffes sont d'un seul tenant avec la plaque en tôle métallique formant dos, en constituant des prolongements de ladite plaque formant dos, perpendiculaires à celle-ci, raccordés par une pliure de la tôle métallique de la plaque formant dos.

Dans une autre version les griffes du crampon sont constituées de pièces de tôle métallique ou en fil métallique rapportées par soudure sur la face inférieure de la plaque en tôle métallique formant dos du crampon.

Dans les deux versions les griffes ont avantageusement une section rectangulaire seule la pointe de la griffe faisant exception à cette forme rectangulaire de la section. L'orientation du grand côté de la section rectangulaire est avantageusement dirigée dans le sens longitudinal du crampon mais d'autres orientations sont possibles, comme cela sera expliqué plus loin en relation avec des formes de réalisation préférées. Dans des variantes la section rectangulaire peut être remplacée par une section en forme de trapèze, de demi-lune, de rectangle présentant des coins arrondis ou chanfreinés et même par une section circulaire dans certaines formes de réalisation.

Dans certains cas les grands côtés de la section rectangulaire des griffes sont symétriques par rapport à l'axe longitudinal du crampon. Dans le cas où certains grands côtés des sections rectangulaires sont orientés dans le sens transversal, il peut être avantageux qu'une ou plusieurs griffes soient disposées à cheval sur l'axe longitudinal du crampon.

Les grands côtés de la section des griffes peuvent également présenter des orientations variées, certains grands côtés étant orientés selon un angle compris entre ces deux orientations.

Pour obtenir une plus grande robustesse de la pliure séparant la partie plaque supérieure de la griffe correspondante, une nervure de renforcement rentrante, réalisée par emboutissage, est présente dans la pliure de la tôle, dans la partie haute des griffes proche de la pliure et en se prolongeant dans la pliure et dans la partie de la plaque formant dos proche de la pliure, cette nervure étant réalisée dans le sens longitudinal des griffes approximativement au milieu de la largeur des griffes.

Pour disposer de pointes d'une meilleure qualité mécanique de dureté et de résistance à la flexion les pointes des griffes peuvent être écrouies lors de la fabrication. Un écrouissage de moindre intensité peut également être réalisé sur la partie tige des griffes. Le fait que le dos et les griffes peuvent être réalisés en tôle selon l'invention permet d'utiliser un métal de qualité moyenne, les parties tiges de griffe et pointes pouvant être aussi facilement écrouies lors de la fabrication du crampon à la presse, en effectuant des opérations de découpe, de pliage, d'emboutissage et de matriçage.

Pour faciliter l'assemblage provisoire d'un crampon et d'une agrafe, avant la fixation définitive à une extrémité de bande transporteuse, la présente invention prévoit qu'au moins certaines des griffes portent sur leur côté extérieur une rainure horizontale de faible profondeur réalisée en creux dans la tige de la griffe, ayant une hauteur très légèrement supérieure à l'épaisseur de la tôle de la plaque supérieure de l'agrafe de jonction à laquelle est destiné le crampon et étant située à proximité de l'amorce de la partie pointe qui présente une zone plane oblique par rapport au plan général de la griffe, ladite zone plane commençant depuis la pointe extrême de la griffe et se terminant par une ligne droite jouxtant le bord inférieur de la rainure, le bord supérieur de la rainure étant avantageusement chanfreiné et les fonds des rainures de deux griffes opposées présentant un écartement qui correspond à l'écartement des bords, situés le plus vers l'extérieur, des trous de la plaque supérieure de l'agrafe de jonction à laquelle est destiné le crampon.

Il est également possible de prévoir les rainures sur les côtés intérieurs des griffes, la rainure de chaque griffe considérée étant horizontale de faible profondeur réalisée en creux dans la tige de la griffe, ayant une hauteur très légèrement supérieure à l'épaisseur de la tôle de la plaque supérieure de l'agrafe de jonction à laquelle est destiné le crampon et étant située à proximité de l'amorce de la partie pointe qui présente une zone plane oblique par rapport au plan général de la griffe, ladite zone plane commençant depuis la pointe extrême de la griffe et se terminant par une ligne droite jouxtant le bord inférieur de la rainure, le bord supérieur de la rainure étant avantageusement chanfreiné et les fonds des rainures de deux griffes opposées présentant un écartement qui correspond à l'écartement des bords, situés le plus vers l'intérieur, des trous de la plaque supérieure de l'agrafe de jonction à laquelle est destiné le crampon.

Grâce à cela, il est possible d'encliqueter les griffes dans les bords des trous de la plaque supérieure de l'agrafe, l'ensemble crampon-agrafe étant ainsi prêt à l'enfoncement des griffes, au moyen d'un marteau ou d'un poinçon hydraulique ou pneumatique. Le chanfrein pratiqué sur le bord haut de la rainure a pour but de faciliter le glissement sur le bord du trou car un bord droit aurait tendance à s'accrocher sur le bord du trou lors de l'enfoncement. De même la zone oblique de la pointe décrite plus haut permet l'enfoncement de la griffe dans le trou en provoquant un déplacement élastique de la tige du crampon, ce déplacement étant inversé lors de l'encliquetage de la rainure avec le bord du trou de la plaque supérieure de l'agrafe.

Grâce à la conception du crampon les orientations des griffes peuvent être choisies à volonté, en fonction des contraintes prévues pour la jonction. Plusieurs formes de réalisation de l'invention préférées, mais non limitatives, vont maintenant être décrites avec référence au dessin dont les figures sont décrites brièvement ci-après.
La figure 1 est une vue par le côté, partiellement en coupe, d'une agrafe et d'un crampon en fil d'acier de l'art antérieur, selon le brevet EP 0 464 399.
La figure 2 est une vue en perspective d'une forme de réalisation de crampon selon l'invention.
La figure 3 est une vue en perspective d'une forme de réalisation de crampon selon l'invention.
La figure 4 est une vue en perspective d'un crampon similaire à celui de la figure 2, mais comportant des rainures d'encliquetage.
La figure 5 est une vue en perspective d'un crampon selon la figure 4, prêt à être enfilé dans les trous correspondants de la plaque supérieure d'une agrafe.
La figure 6 est une vue en perspective montrant un fragment de crampon selon la figure 4 et un fragment d'agrafe, le crampon étant encliqueté au moyen des rainures de ses griffes dans les bords des trous de la plaque supérieure de l'agrafe.
La figure 7 est une vue en perspective représentant une agrafe montée sur une extrémité de bande transporteuse, la partie supérieure formant dos du crampon étant visible noyée dans un creux de la plaque supérieure de l'agrafe et une partie des pliures des griffes étant visible.
La figure 8 représente une autre forme de réalisation de crampon et une agrafe correspondante.
La figure 9 représente un crampon selon la figure 8 monté sur une agrafe correspondante.

Plusieurs formes de réalisation préférées mais non limitatives de crampons selon l'invention vont maintenant être décrites avec référence aux figures du dessin.

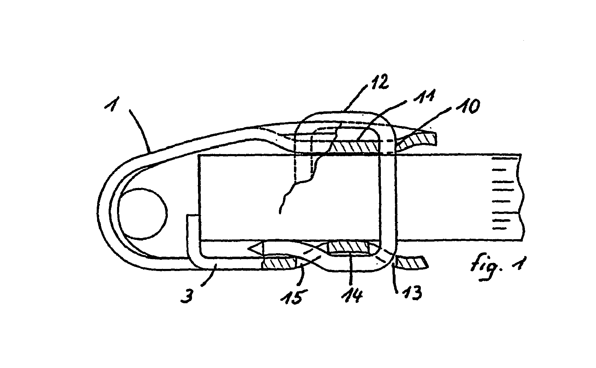

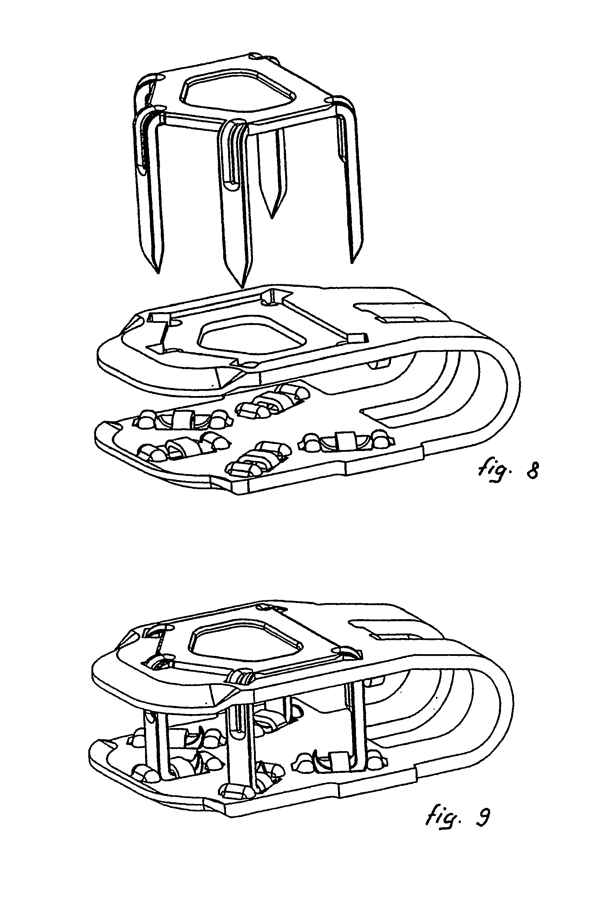

La figure 1 qui est un dessin d'un système crampon-agrafe de l'art antérieur selon le brevet EP 0 464 399 (figure 8) monté sur une extrémité de bande transporteuse montre un crampon en fil métallique de section ronde 12, une agrafe 1 comportant une plaque supérieure présentant un creux 11, une plaque inférieure 3 comportant un pontet 14, des trous 10, 13 et 15 étant ménagés pour le passage des branches du crampon en fil métallique à deux branches, en forme générale de U.

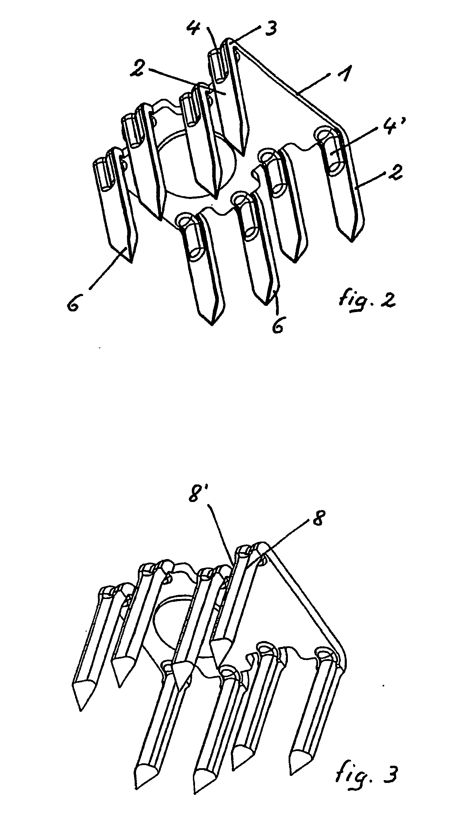

La figure 2 représente une forme de réalisation de crampon selon l'invention, on remarque la partie supérieure formant dos 1, six griffes 2, les pliures 3 reliant la partie supérieure formant dos 1 aux griffes 2, les nervures rentrantes 4 vues de l'extérieur, et leurs parties rentrées 4', les pointes 6. Comme le comprend aisément un homme de l'art expérimenté dans le travail des métaux, cette pièce peut être obtenue par un travail à la presse, par découpe, matriçage, et emboutissage. A l'occasion de ce travail il est facile de matricer les pointes, et éventuellement les tiges 7 des griffes pour leur conférer des propriétés de dureté et de résistance à la flexion supérieures à celles du métal de base. On comprend également que la conception même du crampon permet de réaliser sur une même partie formant dos un nombre de griffes supérieur à deux, pouvant même aller si on le souhaite jusqu'à, par exemple, 10 griffes. La forme de réalisation représentée comporte 6 griffes disposées dans le sens longitudinal. On remarquera que cette forme de réalisation prévoit avantageusement des décalages en ce qui concerne les implantations des griffes dans le sens transversal. Ces décalages permettent d'éviter de créer des lignes longitudinales de déchirure dans la carcasse de l'extrémité de la bande transporteuse traversée par les crampons et soumise à des tractions et à des à-coups dans le sens longitudinal. Ces lignes de déchirure éventuelles seraient dues à des perçages alignés dans le sens longitudinal qui seraient provoqués par des griffes non décalées dans le sens transversal, ces perçages étant ainsi trop rapprochés longitudinalement.

Pour la suite de la description des formes de réalisation de l'invention les mêmes références seront utilisées pour des parties de crampons et/ou d'agrafes similaires. Par convention le sens longitudinal des crampons ou des agrafes est considéré comme étant celui de la bande transporteuse sur laquelle doivent être montés le crampon et l'agrafe, quelles que soient les dimensions des crampons et des agrafes. De même le sens transversal sera le sens perpendiculaire au sens longitudinal, quelles que soient les dimensions des crampons et des agrafes. Par contre le sens longitudinal des griffes sera celui de leur plus grande dimension.

La figure 3 représente une autre forme de réalisation de crampon selon invention dans laquelle les tiges des griffes ont une section qui n'est pas rigoureusement rectangulaire, les deux angles extérieurs 8, 8' de la section étant chanfreinés. Dans ce cas également cette forme peut être obtenue au cours de la fabrication, grâce à un matriçage.

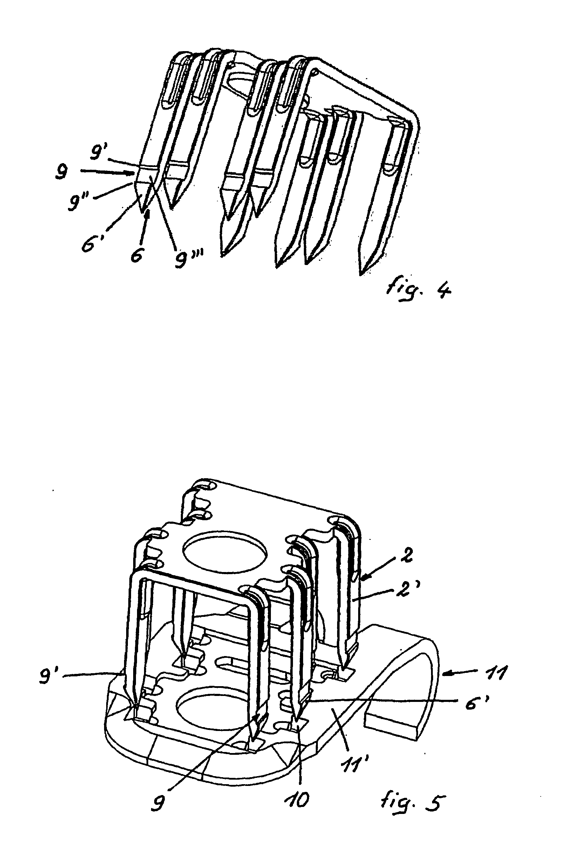

La figure 4 représente une autre forme de réalisation de crampon selon l'invention semblable à celle de la figure 2 mais sur laquelle on remarque des rainures 9 pratiquées dans les griffes. Ces rainures 9 sont peu profondes et elles peuvent être obtenues au cours de la fabrication du crampon, grâce à une opération de matriçage. Les rainures 9 comportent un bord supérieur 9', un fond 9" et un bord inférieur 9"'. Le bord inférieur 9"' jouxte une partie oblique 6' de la pointe 6 qui s'étend de la pointe extrême jusqu'au voisinage du bord inférieur 9"' de la rainure 9.

La figure 5 montre le crampon selon l'invention de la figure 4 prêt à être enfilé dans des trous traversants 10 pratiqués dans la plaque supérieure 11' d'une agrafe 11 de jonction de bande transporteuse, ces trous ayant une section adaptée à la section des griffes.

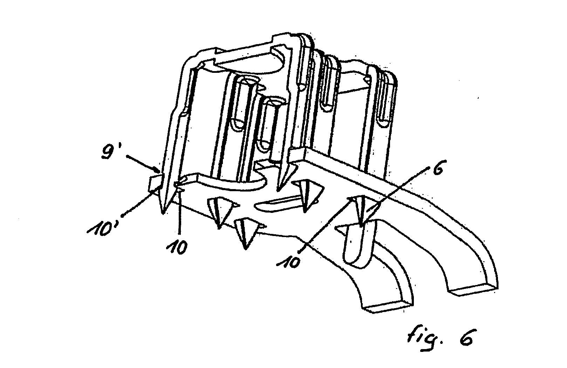

La figure 6 montre le crampon selon l'invention de la figure 5 encliqueté avec les bords 10' des trous traversants 10 engagés dans les rainures. Lors de l'enfoncement des griffes dans les trous les parties obliques des pointes 6 des griffes ont momentanément déformé élastiquement les griffes en glissant sur les bords des trous, et lorsque ces bords 10' rencontrent la rainure les griffes s'enclenchent, en retrouvant leur forme d'origine.

Ceci permet de présenter des ensembles crampon-agrafe prêts à être montés sur une extrémité de bande transporteuse.

On peut aussi remarquer sur les figures 4, 5 et 6 que le bord supérieur 9' de la rainure est chanfreiné. Ce chanfrein a pour but d'éviter que lors de l'enfoncement ultérieur des griffes dans l'extrémité de bande transporteuse, le bord supérieur de la rainure s'accroche au bord du trou de la plaque supérieure de l'agrafe et de permettre ainsi un enfoncement en douceur des griffes.

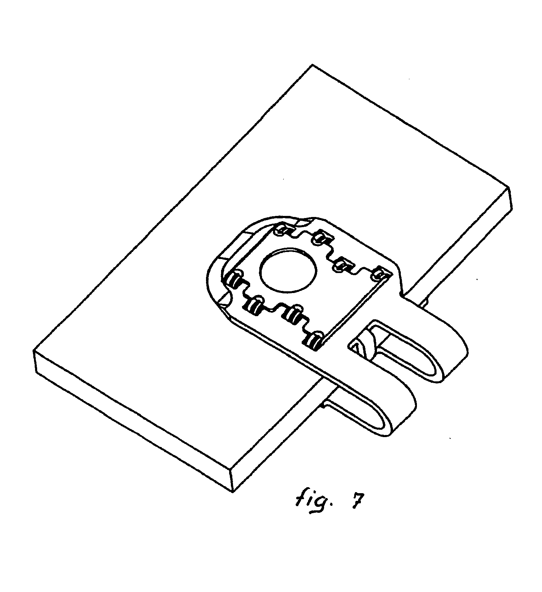

La figure 7 montre une agrafe montée sur l'extrémité d'une bande transporteuse. On remarque que le crampon selon l'invention est enfoncé pratiquement complètement dans un creux de la face supérieure de la plaque supérieure de l'agrafe. Un tel crampon, bien arrimé par ses agrafes multiples, est à l'abri de l'arrachement provoqué par les râcleurs lors du fonctionnement de la bande transporteuse. Une remarque importante doit être faite ici. Grâce à la conception du crampon selon l'invention, dans toutes ses formes de réalisation, la plaque supérieure peut être relativement mince ce qui facilite son logement dans le creux 15 de la plaque supérieure de l'agrafe, tandis que les griffes obtenues par découpe et repli de la tôle de la plaque supérieure, peuvent présenter une section importante en utilisant une forme rectangulaire, ou d'autres formes, comme indiqué plus haut, ayant une des dimensions de la section transversale de la griffe nettement supérieure à celle de l'autre dimension qui, elle, correspond à l'épaisseur de la plaque supérieure. Dans le cas de griffes rapportées par soudure à la partie supérieure formant dos, il est évident que le choix de la section transversale de la griffe est très ouvert, cette famille de crampons selon l'invention bénéficiant également des avantages du crampon à griffes multiples selon l'invention, dont la partie supérieure formant dos peut avoir une épaisseur relativement faible, facilement encastrable dans la plaque supérieure des agrafes.

La figure 8 représente une autre forme de réalisation, dite en étoile, de crampon selon l'invention. On remarque que les orientations des griffes sont variées. Cette diversité d'orientations permettent à l'agrafe posée de bien se comporter dans le cas où la bande transporteuse est soumise à des forces et à des à-coups orientés dans des directions diverses, en particulier dans le cas de la mise en auge de la bande transporteuse destinée au traitement de matériaux en vrac.

La figure 9 représente la même agrafe et le même crampon que la figure 8, le crampon étant à sa place définitive dans l'agrafe.

L'invention atteint donc ainsi tous les buts fixés initialement, c'est-à-dire la fabrication aisée au moyen d'un outillage bien connu des hommes de l'art, sans reprise, d'un crampon à griffes multiples robuste, comportant un dos relativement mince, facile à loger sans qu'il ne déborde trop de la plaque supérieure de l'agrafe, les griffes pouvant présenter des propriétés mécaniques de dureté et de résistance à la flexion différentes de celles de la partie formant dos du crampon, et ce sans travail de reprise après la fabrication du crampon par travail à la presse et ce en employant un métal de qualité moyenne grâce à un écrouissage différencié, obtenu sans reprise, exécuté par l'outillage de fabrication du crampon.

La versatilité des configurations permises sans sortir de la portée de l'invention est particulièrement appréciable.

## Revendications

1. Crampon pour agrafes de jonction de bande transporteuse comportant une partie supérieure formant dos (1) et des griffes (2) globalement perpendiculaires à ladite partie supérieure formant dos (1) et destinées à passer dans des trous correspondants de la plaque supérieure d'une agrafe de jonction de bande transporteuse du type présentant un profil en forme de U et comportant une plaque supérieure, une plaque inférieure et un ou plusieurs charnons réunissant la plaque supérieure et la plaque inférieure, la partie supérieure formant dos (1) étant constituée d'une plaque en tôle métallique dont la configuration est adaptée à celle d'un creux de réception ménagé dans la plaque supérieure d'une agrafe de jonction correspondante, ladite partie supérieure formant dos (1) portant sur sa périphérie au minimum deux griffes (2) et de préférence davantage, **caractérisé en ce que** ces griffes sont reliées à la partie supérieure (1) en constituant des prolongements perpendiculaires de ladite plaque formant dos, soit en étant raccordés par une pliure (3) de la tôle métallique formant dos, ladite pliure comportant une nervure de renforcement rentrante (4) réalisée par emboutissage dans la partie haute des griffes proche de la pliure (3) se prolongeant dans la pliure proprement dite (3) et dans la zone de la partie supérieure (1) proche de la pliure (3), la nervure de renforcement (4) étant réalisée dans le sens longitudinal des griffes (2), approximativement au milieu de la largeur des griffes (2), soit en ayant les griffes (2) étant reliées par soudure approximativement à la périphérie de la pièce de tôle constituant la partie supérieure (1) du crampon.

2. Crampon selon la revendication 1, **caractérisé en ce que** les pointes (6) des griffes (2) ont été écrouies lors de la fabrication et présentent une dureté et une résistance à la flexion supérieures à celles des autres parties des griffes (2) et à celle de la plaque formant dos (1).

3. Crampon selon la revendication 2, **caractérisé en ce que** la partie tige (2') des griffes (2) a été écrouie lors de la fabrication et présente une dureté et une résistance à la flexion supérieures à celles de la plaque formant dos (1) mais inférieure à celle de la pointe (6).

4. Crampon selon l'une quelconque des revendications qui précèdent, **caractérisé en ce que** les griffes (2) ont une section rectangulaire, seule la pointe (6) de la griffe (2) faisant exception à cette forme rectangulaire de la section.

5. Crampon selon la revendication 4, **caractérisé en ce que** les grands côtés de la section des griffes (2) peuvent présenter des orientations variées, certains grands côtés étant orientés dans le sens transversal, d'autres dans le sens longitudinal et d'autres encore étant orientés selon un angle compris entre ces deux orientations.

6. Ensemble crampon-agrafe, comportant un crampon selon l'une quelconque des revendications qui précèdent, **caractérisé en ce qu'**au moins certaines des griffes comportent sur leur côté extérieur une rainure horizontale (9) de faible profondeur réalisée en creux dans la tige (2') de la griffe (2), ayant une hauteur très légèrement supérieure à l'épaisseur de la tôle de la plaque supérieure de l'agrafe de jonction à laquelle est destiné le crampon et étant située à proximité de l'amorce de la partie pointe qui présente une zone oblique plane (6') par rapport au plan général de la griffe, ladite zone plane commençant depuis la pointe extrême de la griffe et se terminant par une ligne droite jouxtant le bord inférieur (9") de la rainure (9), le bord supérieur de la rainure (9) étant avantageusement chanfreiné et les fonds (9"') des rainures de deux griffes opposées présentant un écartement qui correspond à l'écartement des bords, situés le plus vers l'extérieur, des trous de la plaque supérieure de l'agrafe de jonction à laquelle est destiné le crampon.

7. Ensemble crampon-agrafe comportant un crampon selon l'une quelconque des revendications 1 à 5, **caractérisé en ce qu'**au moins certaines des griffes portent sur leur côté intérieur une rainure horizontale de faible profondeur réalisée en creux dans la tige (2') de la griffe (2), ayant une hauteur très légèrement supérieure à l'épaisseur de la tôle de la plaque supérieure de l'agrafe de jonction à laquelle est destiné le crampon et étant située à proximité de l'amorce de la partie pointe qui présente une zone plane oblique (6') par rapport au plan général de la griffe, ladite zone plane commençant depuis la pointe extrême de la griffe et se terminant par une ligne droite jouxtant le bord inférieur (9") de la rainure (9), le bord supérieur de la rainure (9) étant avantageusement chanfreiné et les fonds (9"') des rainures de deux griffes opposées présentant un écartement qui correspond à l'écartement des bords, situés le plus vers l'intérieur, des trous de la plaque supérieure de l'agrafe de jonction à laquelle est destiné le crampon.

8. Ensemble crampon-agrafe selon la revendication 6 ou selon la revendication 7, **caractérisé en ce que** le crampon est associé à une agrafe de jonction de bande transporteuse, les griffes (2) du crampon étant enfilées dans les trous correspondants de la plaque supérieure (11') de l'agrafe, les rainures (9) des griffes étant encliquetées avec les bords des trous de la plaque supérieure de l'agrafe, les pointes (6) des griffes (2) dépassant éventuellement quelque peu sous la face inférieure de la plaque supérieure (11') de l'agrafe et ce, en fonction de l'épaisseur de la tôle constituant la plaque supérieure (11') de l'agrafe et du positionnement des rainures (9) dans la partie basse des griffes.

## Claims

1. A clip for attaching staples for joining conveyor belt ends comprising a top portion forming the back (1) and claws (2) substantially perpendicular to said top portion forming the back (1) and intended to go through corresponding holes in the top plate of a joining staple of conveyor belt ends of the type having a U-shaped profile and including a top plate, a lower plate and one or several knuckles joining the top plate and the lower plate, the top plate forming the back (1) being composed of a metal sheet plate the configuration of which is adapted to that of an accommodation recess provided in the top plate of a corresponding joining staple, said top portion forming the back (1) bearing, on the periphery thereof, at least two claws (2) and preferably more, **characterized in that** such claws are connected to the top portion (1) by composing perpendicular extensions of said plates forming the back, either being connected by a bend (3) of the metal sheet plate forming the back, said bend including a re-entrant reinforcing rib (4) embossed in the top portion of the claws near the bend (3) and extending in the bend proper (3) and in the area of the top portion (1) close to the bend (3), the reinforcing rib (4) being provided in the longitudinal direction of the claws (2) approximately in the middle of the width of the claws (2), or having the claws (2) being welded together approximately at the periphery of the metal sheet part composing the top portion (1) of the clip.

2. The clip according to claim 1, **characterized in that** the spikes (6) of the claws (2) are hammer-hardened during the manufacture thereof and have a hardness and a bending strength above those of the other parts of the claws (2) and that of the plate forming the back (1).

3. The clip according to claim 2, **characterized in that** the stem part (2') of the claws has been hammer-hardened during the manufacture thereof and has a hardness and a bending strength above those of the plate forming the back (1) but lower than that of the spike (6).

4. The clip according to any one of the preceding claim, **characterized in that** the claws (2) have a rectangular section, with only the spike (6) of the claw (2) being an exception to such a rectangular shape of the section.

5. The clip according to claim 4, **characterized in that** the larger sides of the claws (2) section can have varied orientations, some larger sides being transversally oriented, other sides being longitudinally oriented and other sides again being oriented along an angle between both these orientations.

6. A clip/staple assembly comprising a clip according to any one of the preceding claims, **characterized in that** at least some of the claws have a shallow horizontal groove (9) embossed in the stem (2') of the claw (2), with a height which is slightly above the thickness of the metal sheet of the top plate of the joining staple which the clip is intended for and being located close to the leader of the spike part which has a plane oblique area (6') with respect to the general plane of the claw, said plane area starting from the extreme spike of the claw and ending with a straight line close to the lower edge (9") of the groove (9) with the top edge of the groove (9) being advantageously chamfered and the bottoms (9"') of the grooves of both opposite claws having a spacing which corresponds to the spacing of the outermost edges of the holes of the top plate of the joining staple which the clip is intended for.

7. A clip/staple assembly comprising a clip according to anyone of claims 1 to 5, **characterized in that** at least some of the claws have on their inner sides a shallow horizontal groove embossed in the stem (2') of the claw (2), with a height which is slightly above the thickness of the metal sheet top plate of the joining staple which the clip is intended for, and being located close to the leader of the spike which has an oblique plane area (6') with respect to the general plane of the claw, said plane area starting from the extreme spike of the claw and ending with a straight line close to the lower edge (9") of the groove (9), with the top edge of the groove (9) being advantageously chamfered and the bottoms (9"') of the grooves of both opposite claws having a spacing which corresponds to the spacing of the edges located in an innermost position, of the holes in the top plate of the joining staple which the clip is intended for.

8. The clip/staple assembly according to claim 6 or according to claim 7, **characterized in that** the clip is associated with a joining staple of conveyor belts, the claws (2) of the clip being engaged in the corresponding holes of the top plate (11') of the staple, the grooves (9) of the claws being snap-fitted on the edges of the holes of the top plate of the staple, the spikes (6) of the claws (2) possibly passing under the lower face of the top plate (11') of the staple as a function of the thickness of the metal sheet composing the top plate (11') of the staple and the positioning of the grooves (9) in the lower part of the claws.

## Patentansprüche

1. Clip für Verbindungsklammern eines Förderbands, umfassend einen oberen Teil, der einen Rücken (1) bildet, und Krallen (2), im ganzen senkrecht zu dem oberen Teil, der einen Rücken (1) bildet und dazu vorgesehen, durch die entsprechenden Öffnungen der oberen Platte einer Verbindungsklammer des Förderbands des Typs zu verlaufen, der ein Profil in Form eines U aufweist und eine obere Platte umfasst, eine untere Platte und ein oder mehrere Scharniere, die die obere Platte und die untere Platte verbinden, wobei die obere Platte, die einen Rücken (1) bildet, aus einer Platte aus Metallblech besteht, deren Konfiguration an diejenige eines Aufnahmehohlraums angepasst ist, der in der oberen Platte einer entsprechenden Verbindungsklammer angebracht ist, wobei der obere Teil, der einen Rücken (1) bildet, auf dem Umfang mindestens zwei Krallen (2) und vorzugsweise mehrere trägt, **dadurch gekennzeichnet, dass** diese Krallen am oberen Teil (1) verbunden sind, indem sie senkrechte Verlängerungen der Platte, die einen Rücken bildet, darstellen, entweder, indem sie durch einen Falz (3) des Metallblechs, das einen Rücken (1) bildet, verbunden sind, wobei der Falz eine einspringende Verstärkungsrippe (4) aufweist, durchgeführt durch Hohlprägen im oberen Teil der Krallen, nahe am Falz (3), sich in den eigentlichen Falz (3) und in den Bereich des oberen Teils (1), nahe am Falz (3), erstreckend, wobei die Verstärkungsrippe (4) in der Längsrichtung der Krallen (2), ungefähr in der Mitte der Breite der Krallen (2), durchgeführt ist, oder, indem die Krallen (2) durch Schweißen, ungefähr am Umfang des Blechstücks, das den oberen Teil (1) des Clips darstellt, verbunden sind.

2. Clip nach Anspruch 1, **dadurch gekennzeichnet, dass** die Spitzen (6) der Krallen (2) bei der Herstellung kaltverfestigt wurden und eine Härte und eine Biegefestigkeit als diejenigen der anderen Teile der Krallen (2) und als diejenige der Platte, die einen Rücken bildet (1), sind.

3. Clip nach Anspruch 2, **dadurch gekennzeichnet, dass** der Schaftabschnitt (2') der Krallen (2) bei der Herstellung kaltverfestigt wurde und eine Härte und eine Biegefestigkeit aufweist, die höher als diejenigen der Platte ist, die einen Rücken (1) bildet, aber niedriger als diejenige der Spitze (6) sind.

4. Clip nach einem der vorhergehenden Ansprüche, **dadurch gekennzeichnet, dass** die Krallen (2) einen rechtwinkligen Schnitt aufweisen, wobei nur die Spitze (6) der Kralle (2) eine Ausnahme von dieser rechtwinkligen Form des Schnitts darstellt.

5. Clip nach Anspruch 4, **dadurch gekennzeichnet, dass** die großen Seiten des Schnitts der Krallen (2) verschiedene Ausrichtungen aufweisen können, wobei bestimmte große Seiten in der Querrichtung ausgerichtet sind, andere in der Längsrichtung und wieder andere in einem Winkel zwischen diesen zwei Ausrichtungen ausgerichtet sind.

6. Einheit aus Clip und Klammer, umfassend einen Clip nach einem der vorhergehenden Ansprüche, **dadurch gekennzeichnet, dass** mindestens bestimmte der Krallen auf ihrer Außenseite eine horizontale Nut (9) mit geringer Tiefe aufweisen, durchgeführt versenkt im Schaft (2') der Kralle (2) mit einer Höhe, die sehr geringfügig größer als die Dicke des Blechs der oberen Platte der Verbindungsklammer ist, für die der Clip bestimmt ist, und sich in der Nähe des Anfangs des Spitzenteils befindet, der einen ebenen schrägen Bereich (6') bezüglich der allgemeinen Ebene der Kralle aufweist, wobei der ebene Bereich an der extremen Spitze der Kralle beginnt und durch eine gerade Linie endet, die neben dem unteren Rand (9") der Nut (9) liegt, wobei der obere Rand der Nut (9) vorteilhafterweise abgeschrägt ist und die Böden (9"') der Nuten von zwei gegenüberliegenden Krallen einen Abstand aufweisen, der dem Abstand der Ränder, die sich am weitesten nach außen hin befinden, der Öffnungen der oberen Platte der Verbindungsklammer, für die der Clip bestimmt ist, entspricht.

7. Clip und Verbindungsklammer, umfassend einen Clip nach einem der Ansprüche 1 bis 5, **dadurch gekennzeichnet, dass** mindestens bestimmte der Krallen auf ihrer Innenseite eine horizontale Nut mit geringer Tiefe aufweisen, durchgeführt versenkt im Schaft (2') der Kralle (2) mit einer Höhe, die sehr geringfügig größer als die Dicke des Blechs der oberen Platte der Verbindungsklammer ist, für die der Clip bestimmt ist, und sich in der Nähe des Anfangs des Spitzenteils befindet, der einen ebenen schrägen Bereich (6') bezüglich der allgemeinen Ebene der Kralle aufweist, wobei der ebene Bereich an der extremen Spitze der Kralle beginnt und durch eine gerade Linie endet, die neben dem unteren Rand (9") der Nut (9) liegt, wobei der obere Rand der Nut (9) vorteilhafterweise abgeschrägt ist, und die Böden (9"') der Nuten von zwei gegenüberliegenden Krallen einen Abstand aufweisen, der dem Abstand der Ränder, die sich am weitesten nach innen hin befinden, der Öffnungen der oberen Platte des Verbindungsklammer, für die der Clip bestimmt ist, entspricht.

8. Einheit aus Clip und Verbindungsklammer nach Anspruch 6 oder Anspruch 7, **dadurch gekennzeichnet, dass** der Clip mit einer Verbindungsklammer eines Förderbands verbunden ist, wobei die Krallen (2) des Clips in den entsprechenden Öffnungen der oberen Platte (11') der Klammer aufgereiht sind, wobei die Nuten (9) der Krallen in die Ränder der Öffnungen der oberen Platte der Klammer eingerastet sind, wobei die Spitzen (6) der Krallen (2) eventuell geringfügig unter der Unterseite der oberen Platte (11') der Klammer hervorragen, und dies je nach der Dicke des Blechs, das die obere Platte (11') der Klammer bildet und der Anordnung der Nuten (9) im unteren Teil der Krallen.
